# FASCICULE DE BREVET EUROPEEN

(11) **EP 4 237 261 B1**
(45) Date de publication et mention de la délivrance du brevet: **16.04.2025**
(21) Numéro de dépôt: 21810404.0
(22) Date de dépôt: 22.10.2021
(51) Int. Cl.: B60C 11/00, B60C 11/04, B60C 11/13

(54) **PNEUMATIQUE AVEC UNE BANDE DE ROULEMENT COMPORTANT DES RAINURES CIRCONFÉRENTIELLES RENFORCÉES**
REIFEN MIT EINER LAUFFLÄCHE MIT VERSTÄRKTEN UMFANGSRILLEN
TYRE WITH A TREAD HAVING REINFORCED CIRCUMFERENTIAL GROOVES

(30) Priorité: 28.10.2020 FR 2011019
(43) Date de publication de la demande: 06.09.2023
(73) Titulaire: COMPAGNIE GENERALE DES ETABLISSEMENTS MICHELIN, 63000 Clermont-Ferrand (FR)
(72) Inventeur: CAREME, Christopher, 63040 CLERMONT-FERRAND Cedex 9 (FR)
(74) Mandataire: M.F.P. Michelin
(86) Numéro de dépôt international: PCT/FR2021/051857
(87) Numéro de publication internationale: WO 2022/090652

(56) Documents cités:
- WO-A1-2009/080125
- WO-A1-2016/174100
- FR-A1- 3 042 441
- US-A1- 2019 160 876
- US-A1- 2019 193 468

## Description

### Domaine de l'invention

La présente invention concerne un pneumatique pour véhicule automobile dont les performances en adhérence longitudinale sur sol sec sont améliorées. L'invention est plus particulièrement adaptée pour un pneumatique radial destiné à équiper un véhicule de tourisme ou une camionnette.

De façon générale, un pneumatique est un objet ayant une géométrie de révolution par rapport à un axe de rotation. Un pneumatique comprend deux bourrelets destinés à être montés sur une jante ; il comprend également deux flancs reliés aux bourrelets, un sommet comportant une bande de roulement destinée à entrer en contact avec le sol, le sommet ayant un premier côté relié à l'extrémité radialement extérieure de l'un des deux flancs et ayant un deuxième côté relié à l'extrémité radialement extérieure de l'autre des deux flancs.

### Définitions

Par convention, on considère un repère (O, XX', YY', ZZ'), dont le centre O coïncide avec le centre du pneumatique, les directions circonférentielles XX', axiale YY', et radiale ZZ' désignent respectivement une direction tangente à la surface de roulement du pneumatique selon le sens de rotation, une direction parallèle à l'axe de rotation du pneumatique, et une direction orthogonale à l'axe de rotation du pneumatique.

Par radialement intérieur, respectivement radialement extérieur, on entend plus proche, respectivement plus éloigné de l'axe de rotation du pneumatique.

Par axialement intérieur, respectivement axialement extérieur, on entend plus proche, respectivement plus éloigné du plan équatorial du pneumatique, le plan équatorial du pneumatique étant le plan passant par le milieu de la bande de roulement du pneumatique et perpendiculaire à l'axe de rotation du pneumatique.

La constitution du pneumatique est usuellement décrite par une représentation de ses constituants dans un plan méridien, c'est-à-dire un plan contenant l'axe de rotation du pneumatique.

Par mélange élastomérique, on entend un matériau élastomérique obtenu par mélangeage de ses divers constituants. Un mélange élastomérique comprend classiquement une matrice élastomérique avec au moins un élastomère diénique de type caoutchouc naturel ou synthétique, au moins une charge renforçante de type noir de carbone et/ou de type silice, un système de réticulation le plus souvent à base de soufre, et des agents de protection.

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Par l'expression « partie en poids pour cent parties en poids d'élastomère » (ou pce), il faut entendre au sens de la présente invention, la part, en masse pour cent parties d'élastomère présent dans la composition de mélange considérée.

La perte viscoélastique, Tgδ, et le module de cisaillement complexe G* sont généralement déterminées lors de la mesure des propriétés dynamiques du mélange élastomérique, sur un viscoanalyseur (Metravib VA4000), selon la norme ASTM D 5992-96. La mesure des propriétés dynamiques est réalisée sur un échantillon de mélange élastomérique vulcanisé, c'est-à-dire cuit jusqu'à un taux de conversion d'au moins 90%, l'échantillon ayant la forme d'une éprouvette cylindrique ayant une épaisseur égale à 2 mm et une section égale à 78,5 mm². On enregistre la réponse de l'échantillon de mélange élastomérique à une sollicitation sinusoïdale en cisaillement simple alterné, ayant une amplitude crête-crête égale à 0,7 MPa et une fréquence égale à 10 Hz. On effectue un balayage en température à vitesse de montée en température constante de +1.5°C/min. Les résultats exploités sont généralement le module complexe de cisaillement dynamique G*, comprenant une partie élastique G' et une partie visqueuse G'', et la perte dynamique Tgδ, égale au rapport G''/G'. La température de transition vitreuse Tg est la température à laquelle la perte dynamique Tgδ atteint un maximum lors du balayage en température. La valeur de G* mesurée à 23°C est représentative de la rigidité du matériau caoutchoutique, c'est-à-dire de sa résistance à la déformation élastique.

### Technique antérieure

De manière connue, la bande de roulement d'un pneumatique est pourvue d'une sculpture comprenant notamment des éléments de sculpture ou blocs élémentaires délimités par diverses rainures principales, longitudinales, transversales ou encore obliques, les blocs élémentaires pouvant comporter diverses incisions ou lamelles plus fines. Les rainures constituent des canaux destinés à évacuer l'eau lors d'un roulage sur sol mouillé et les parois de ces rainures définissent les bords des éléments de sculpture. En fonction de l'orientation des forces auxquelles est soumis le pneumatique en roulage, on parle de bord d'attaque d'un bloc de sculpture lorsque la force est orientée vers le centre du bloc, le bord de fuite d'un bloc de sculpture étant le bord opposé.

Pour améliorer l'adhérence d'un pneumatique, et plus particulièrement pour l'adhérence sur sol sec et sur sol humide, il est bien connu de diminuer la rigidité ou la dureté du mélange caoutchouteux constituant de la bande de roulement. Cette diminution de rigidité de la bande de roulement permet à celle-ci de mieux épouser la surface rugueuse du sol de roulage et ainsi la surface réelle de contact avec le sol de roulage est augmentée et la performance d'adhérence améliorée par rapport à une bande de roulement dont le mélange caoutchouteux est plus rigide.

Cependant, l'utilisation d'un mélange caoutchouteux de bande de roulement moins rigide favorise les déformations des rainures de sculptures, ce qui peut dégrader leur aptitude à évacuer l'eau. Dans le document EP1708896B1, il est proposé d'aménager les rainures circonférentielles dans un autre matériau significativement plus rigide que le matériau du reste de la bande de roulement pour limiter la déformation des rainures circonférentielles, et donc de préserver ainsi les performances d'adhérence sur sol mouillé.

Dans le document FR3042441, le principe d'une bande de roulement comprenant une première portion dotée d'un matériau souple qui constitue l'essentiel de la bande de roulement, juxtaposée à une deuxième portion dotée d'un matériau plus rigide, est repris. Plus précisément, au moins une rainure circonférentielle est aménagée dans le matériau rigide. Ladite rainure est bordée d'une gorge d'une faible profondeur inférieure ou égale à 2 mm, et s'étend dans la direction circonférentielle.

La coexistence de plusieurs portions destinées à venir en contact avec la chaussée crée des singularités de pressions au sol : la portion contenant le matériau le plus rigide sera le lieu de surpressions par rapport aux autres portions.

Cependant, et en particulier dans le cas d'une portion rigide sous forme de coin, les discontinuités de pression peuvent restées très marquées, ce qui limite la portée sur la performance adhérence en général et sur sol mouillé en particulier. On observe que la présence de la gorge strictement sur la portion rigide ne diminue pas la surpression.

Les inventeurs se sont donnés comme objectif de supprimer les surpressions de contact liées à la présence de la gorge en bordure des rainures principales circonférentielles, pour une bande de roulement comprenant des portions avec des matériaux souples et rigides.

### Exposé de l'invention

Ce but a été atteint par un pneumatique ayant un axe de rotation et comprenant deux bourrelets, deux flancs reliés aux bourrelets, un sommet ayant un premier côté relié à l'extrémité radialement extérieure de l'un des deux flancs et ayant un deuxième côté relié à l'extrémité radialement extérieure de l'autre des deux flancs, le sommet comportant une bande de roulement, radialement extérieurement à une sous couche, comprenant :
o Au moins un bloc de sculpture portant une face de contact destinée à venir en contact avec la chaussée pendant le roulage du pneumatique, la face de contact étant délimitée axialement par deux extrémités axiales du bloc de sculpture, le bloc de sculpture comprenant :
   - une première portion axiale s'étendant axialement sur une partie de la largeur totale du bloc de sculpture, et s'étendant circonférentiellement sur au moins 75% de la circonférence du pneumatique, ladite première portion axiale portant une première portion axiale de la face de contact, ladite première portion axiale comprenant un matériau de base;
   - une seconde portion axiale s'étendant axialement sur une partie de la largeur totale du bloc de sculpture, et s'étendant circonférentiellement sur au moins 75% de la circonférence du pneumatique, ladite seconde portion axiale portant une deuxième portion axiale de la face de contact, ladite seconde portion axiale comprenant un matériau rigide de renforcement, dont le module de rigidité dynamique de cisaillement est au moins trois fois supérieur à celui du matériau de base ;
o au moins une rainure circonférentielle délimitée axialement par deux extrémités axiales, une desdites extrémités axiales de la rainure circonférentielle étant confondue avec une des extrémités axiales du bloc de sculpture ;
o au moins une gorge aménagée dans le bloc de sculpture et portant une face de contact de la gorge destinée à venir en contact avec la chaussée pendant le roulage du pneumatique, la face de contact de la gorge étant délimitée axialement par : l'extrémité axiale de la rainure circonférentielle confondue avec l'extrémité axiale du bloc de sculpture, et un épaulement radial entre la première portion axiale et la deuxième portion, la gorge étant délimitée radialement par un fond de gorge, la gorge ayant une profondeur P inférieure à 2 mm, mesurée selon une direction radiale entre le fond de gorge et la face de contact la plus radialement extérieure de la première portion axiale ;
o a largeur axiale L7 de la gorge est comprise dans l'intervalle [3 x L52, 1,01xL52], avec L7 étant la largeur axiale de la face de contact de la gorge et L52 étant la largeur axiale de la face de contact de la deuxième portion axiale
o le rapport du module de rigidité dynamique de cisaillement du matériau de la deuxième portion du bloc de sculpture divisé par le module de rigidité dynamique de cisaillement du matériau de la première portion axiale du bloc de sculpture est compris dans l'intervalle [5 ;30], les modules de rigidité de cisaillement étant mesurés à 23°C, à 10 Hz, et sous une déformation de cisaillement alterné de 10% du matériau de chaque portion.

Le principe de l'invention repose sur le constat que la largeur de la gorge aménagée en bordure d'une rainure circonférentielle a un fort impact sur l'adhérence du pneumatique. En effet, les surpressions créées dans l'aire de contact diminuent, voire disparaissent quand la largeur de la gorge augmente. Cette invention s'interprète comme un perfectionnement du brevet FR3042441 où le positionnement d'une gorge en bordure d'une rainure circonférentielle est repris, mais avec une largeur adaptée pour minimiser les surpressions crées dans l'aire de contact.

Selon l'invention, la largeur axiale L7 de la gorge est comprise dans l'intervalle [3 x L52, 1.01xL52]. La largeur minimale de chaque gorge pour percevoir les effets sur l'adhérence est légèrement supérieure à la largeur L52 de la portion du bloc de sculpture constituée du matériau rigide. Quant à la largeur maximale d'une gorge, elle est environ 3 fois supérieure à cette même largeur L52. Dans ces conditions, les surpressions sont significativement diminuées pour ne pas perturber la performance adhérence sur sols sec et mouillé.

Encore selon l'invention, le rapport du module de rigidité dynamique de cisaillement du matériau de la deuxième portion du bloc de sculpture divisé par le module de rigidité dynamique de cisaillement du matériau de la première portion axiale du bloc de sculpture est compris dans l'intervalle [5 ;30], les modules de rigidité de cisaillement étant mesurés à 23°C, à 10 Hz, et sous une déformation de cisaillement alterné de 10% du matériau de chaque portion.

L'adhérence d'un pneumatique en roulage sur un sol obéit à au moins un double phénomène physique d'adhésion et d'indentation dans l'aire de contact. La souplesse du matériau lui permet d'épouser les aspérités du sol pour s'opposer au mouvement du pneumatique dans l'aire de contact. Ce phénomène est d'autant plus amplifié que le matériau est hystérétique. Le renforcement des rainures circonférentielles par le matériau de la deuxième portion du bloc de sculpture a pour objectif d'éviter la déformation et donc l'usure trop rapide des rainures utiles pour maintenir un drainage efficace de l'eau de l'aire de contact. Sur sol mouillé, l'assèchement de la surface de contact est une étape préalable aux phénomènes d'adhésion/indentation décrits plus haut, et donc la présence d'un réseau de drainage de l'eau est nécessaire durant toute la vie d'utilisation du pneumatique. Le module de rigidité dynamique de cisaillement du matériau de renforcement doit être significativement plus élevé que celui du matériau de la première portion axiale du bloc de sculpture. Au minimum, le rapport du module de rigidité dynamique du matériau de la première portion axiale divisé par le module de rigidité dynamique du matériau de la deuxième portion est supérieur ou égal à 5. Ce rapport 5 de rigidité entre les deux portions est suffisant pour limiter les déformations de la rainure, et de la gorge circonférentielles. Au-delà, d'un rapport de 30, le glissement du matériau de renforcement dans l'aire de contact peut entraîner une usure trop rapide de la deuxième portion.

La combinaison des deux caractéristiques principales de l'invention, à savoir d'une part la largeur d'une gorge en fonction de la largeur de la portion rigide du bloc de sculpture, et d'autre part le rapport des rigidités dynamiques de cisaillement des matériaux des deux portions conduit à l'invention.

Les matériaux des deux portions d'un bloc de sculpture sont choisis pour réaliser un compromis de performances entre l'adhérence sur sol sec et mouillé et l'endurance des rainures. Le matériau souple de la première portion axiale qui représente la majeure partie du volume total de la bande de roulement est optimisé pour l'adhérence. Le matériau rigide de la deuxième portion d'un bloc de sculpture représente une très faible proportion de la bande de roulement. Le principe est de limiter le volume du matériau de la deuxième portion de chaque bloc de sculpture au juste nécessaire pour éviter un trop grand impact sur le comportement du pneumatique.

La mise en œuvre de l'invention peut se faire suivant différents modes de réalisation. Les variantes sont liées d'une part aux choix des matériaux "souples" et "rigides", et d'autre part à la géométrie des gorges et rainures ainsi que de leur positionnement dans la bande de roulement.

Préférentiellement, les gorges ont des profondeur P différentes entre les deux portions adjacentes d'un bloc de sculpture. La gorge est aménagée dans la deuxième portion rigide d'un bloc de sculpture, sa largeur est définie de telle manière que la gorge s'étende à la fois sur les deux portions. Il s'ensuit qu'une partie de la gorge se retrouve dans la première portion axiale qui est constituée d'un matériau plus souple. La profondeur radiale de la gorge est adaptée d'une portion à une autre en tenant compte de la différence de rigidité. Dans un mode de réalisation particulier, la gorge pourrait avoir une profondeur P croissante en allant axialement d'une première portion axiale vers la seconde portion.

Avantageusement, la gorge a un profil incliné par rapport à l'axe de rotation du pneumatique. La gorge pourrait avoir également un profil courbe, ou encore un profil en escalier.

Encore avantageusement, la gorge a une profondeur P croissante en allant axialement de la seconde portion vers la première portion axiale d'un bloc de sculpture.

Concernant les modes de réalisation liés aux choix des matériaux, avantageusement, le matériau de la première portion axiale d'un bloc de sculpture est un mélange élastomérique ayant un module dynamique de cisaillement G* inférieur ou égal à 5 MPa, mesuré à 60°C et sous une contrainte alternée à 10 Hz.

La géométrie du ou des secondes portions d'un bloc de sculpture peut être en forme de coin : c'est l'exemple choisi pour expliciter l'invention. Quant à la position dans la bande de roulement, le mélange renforcé peut être disposé en paroi de rainure ou dans l'épaisseur des blocs de sculpture. Les secondes portions de renforcement peuvent être indépendantes ou reliées par une base commune constitué du même matériau de renforcement sur toute ou partie de la largeur de la bande de roulement.

### Description des Figures

La présente invention sera mieux comprise à la lecture de la présentation détaillée de modes de réalisation pris à titre d'exemples nullement limitatifs et illustrés par les dessins annexés sur lesquels :
La figure 1 montre une coupe méridienne schématique d'un pneumatique conforme à un premier mode de réalisation de l'invention.
La figure 2 est un grossissement de la zone entourée en pointillé sur la figure 1. Elle comprend les vues 2-A, 2-B de deux blocs de sculpture adjacents de la bande de roulement.
La figure 3 montre une coupe méridienne schématique d'un pneumatique conforme à un autre mode de réalisation de l'invention.
La figure 4 montre une coupe méridienne schématique du pneumatique utilisé pour réaliser des évaluations de l'invention.
La figure 5 visualise les résultats de simulation de la pression de contact verticale en présence d'une gorge en bordure d'une rainure, sur un pneumatique en comparaison d'un pneumatique de l'état de l'art sans gorge.
La figure 6 visualise les résultats de simulation de l'évolution de la pression de contact verticale en présence d'une gorge en bordure d'une rainure, en fonction de la largeur de la gorge pour un pneumatique de l'invention.

### Description détaillée de l'invention

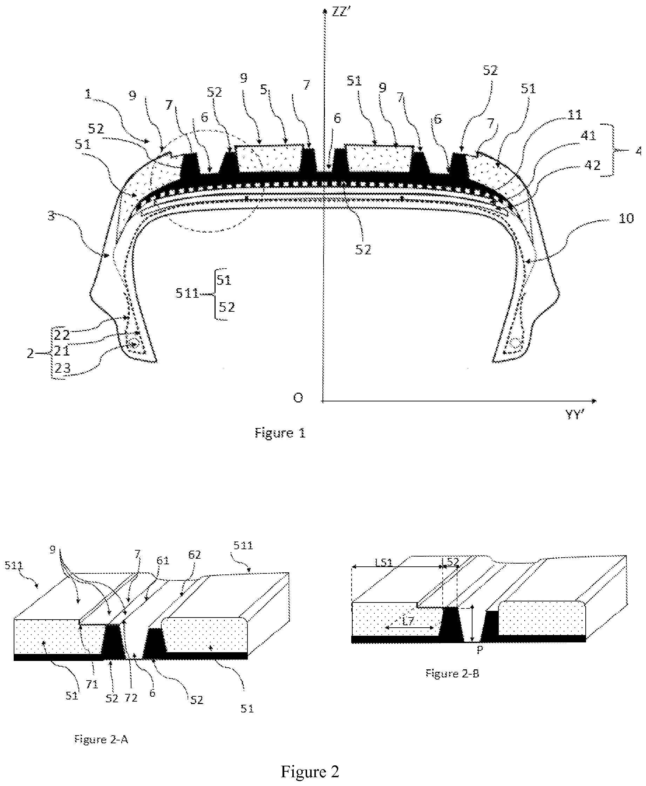

Sur la figure 1, on a représenté une coupe méridienne d'un pneumatique de l'invention de référence générale 1 comprenant une armature de carcasse 10 formé d'au moins une couche de carcasse dotée de renforts enrobés dans un mélange élastomérique. L'armature de carcasse 10 relie deux bourrelets 2, deux flancs 3 reliés aux bourrelets et un sommet 4 composé de deux couches de renforts (41, 42) enrobés dans un mélange élastomérique. Chaque bourrelet 2 comprend une partie principale 21 de la couche de carcasse 10 qui s'enroule autour d'une tringle 23 pour former un retournement 22. Le sommet 4 est posé radialement extérieurement sur l'armature de carcasse 10. Une sous couche 11 vient recouvrir radialement extérieurement le sommet 4. Radialement extérieurement à la sous couche 11, est posée la bande de roulement 5 qui comprend :
o Au moins un bloc de sculpture 511 portant une face de contact 9 destinée à venir en contact avec la chaussée pendant le roulage du pneumatique, la face de contact 9 étant délimitée axialement par deux extrémités axiales du bloc de sculpture 511 qui comprend : une première portion axiale 51 s'étendant axialement sur une partie de la largeur totale du bloc de sculpture, et s'étendant circonférentiellement sur au moins 75% de la circonférence du pneumatique, et portant une première partie axiale de la face de contact 9 du bloc de sculpture 511; une seconde portion axiale 52 s'étendant axialement sur une partie de la largeur totale du bloc de sculpture 511, et s'étendant circonférentiellement sur au moins 75% de la circonférence du pneumatique, ladite seconde portion axiale 52 portant une deuxième partie axiale de la face de contact 9;
o au moins une rainure circonférentielle 6 délimitée axialement par deux extrémités axiales, dont l'une est confondue avec une des extrémités axiales du bloc de sculpture 511.
o au moins une gorge 7 aménagée dans le bloc de sculpture 511 et portant une face de contact de la gorge 7 destinée à venir en contact avec la chaussée pendant le roulage du pneumatique.

Sur la figure 2-A qui représente un grossissement de la partie entourée de la figure 1, on peut voir les détails du bloc de sculpture 511. La rainure circonférentielle 6 est délimitée axialement par les parois (61, 62). La face de contact de la gorge 7 est délimitée axialement par l'extrémité axiale 61 de la rainure circonférentielle 6 confondue avec l'extrémité axiale du bloc de sculpture 511, et un épaulement radial entre la première portion axiale 51 axiale et la deuxième portion 52. La gorge 7 est délimitée radialement par un fond de gorge, et a une profondeur P inférieure à 2 mm, mesurée selon une direction radiale entre le fond de gorge 7 et la face de contact la plus radialement extérieure de la première portion axiale 51. La face de contact 9 comprend une partie dans la première portion axiale 51, une autre partie dans la gorge 7 et enfin une dernière partie dans la portion rigide 52.

Sur la figure 2-B, on trouve les cotations de la rainure circonférentielle 6, de la gorge 7 et du bloc de sculpture 511 avec les portions (51, 52). Les blocs de sculpture 511 se répartissent de part et d'autre de la rainure circonférentielle 6. Dans le mode de réalisation représenté ici, la gorge 7 s'étend depuis la deuxième portion 52 du bloc de sculpture 511 pour se prolonger dans la première portion axiale 51 du bloc de sculpture. La première portion axiale 51 du bloc de sculpture 511 a une largeur axiale L51, et L52 pour l'autre portion 52.

La rainure circonférentielle 6 a une profondeur P qui va de la surface de contact 9 avec le sol jusqu'au fond de la rainure circonférentielle 6. La gorge 7 a une largeur L7, mesurée dans la direction axiale entre les parois (71,72) de la gorge 7, une des parois 72 de la gorge 7 étant confondue avec une des parois du bloc de sculpture 511.

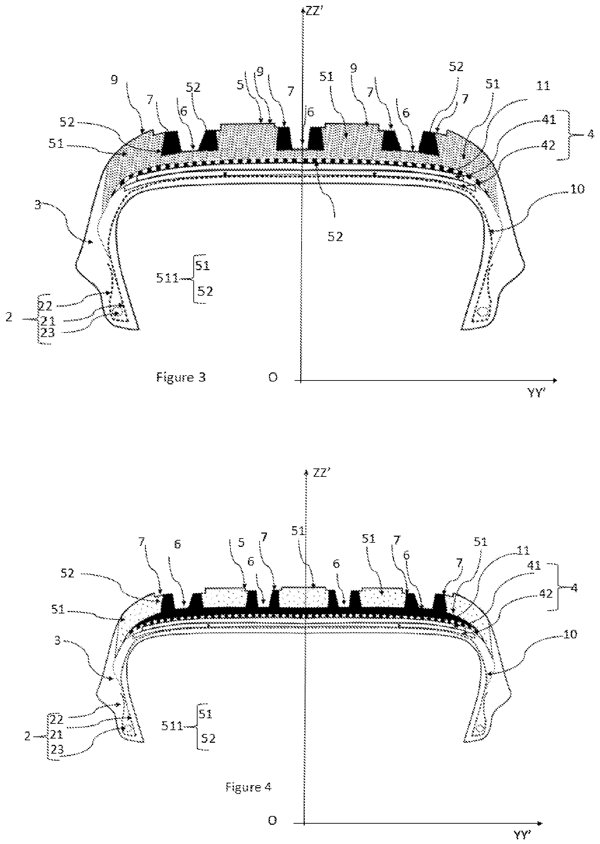

La figure 3 représente un mode de réalisation de l'invention où la seconde portion 52 prend la forme de parois des rainures 6. Ces parois ne sont pas reliées entre elles et sont posées radialement extérieurement sur le matériau de la première portion axiale 51.

Les figures 4,5 et 6 sont liés au pneumatique utilisé pour l'évaluation de l'invention et sont détaillées plus bas.

### Essais

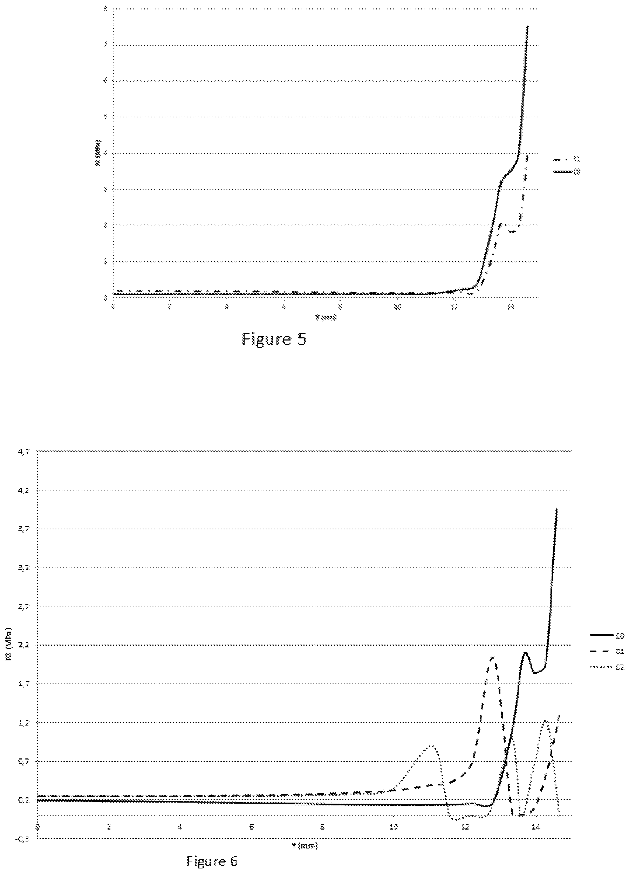

L'invention a été plus particulièrement étudiée pour un pneumatique tourisme de désignation normalisée, selon l'ETRTO (Organisation Technique Européenne pour les Jantes et les Pneumatiques), 245/45 R18 96W. Pour cette dimension pneumatique, une version conforme au premier mode de réalisation de l'invention a été réalisée, comparée à un pneu classique de l'état de l'art sans gorge en bordure d'une rainure. La figure 5 représente une coupe méridienne du pneumatique utilisé pour évaluer l'invention.

La bande de roulement de la dimension testée a une largeur axiale de 245 mm, et comprend quatre rainures circonférentielles. Chaque rainure circonférentielle 6 aménagée dans la deuxième portion 52 est bordée par une gorge 7 de part et d'autre du plan moyen de ladite rainure circonférentielle 6. Au total la bande de roulement comprend huit gorges 7.

Chaque gorge 7 a une largeur de 4 mm, une profondeur comprise entre 0.3 mm et 0.6 mm. La largeur L52 de l'arête de la deuxième portion en contact avec le sol est d'environ 2 mm.

La bande de roulement comprend cinq blocs de sculpture 511. Chaque bloc de sculpture 511 contient une première portion axiale 51 dotée d'un matériau de base, et une deuxième portion 52 dotée d'un matériau plus rigide.

La première portion axiale 51 est constitué d'un mélange élastomérique souple, c'est-à-dire avec un module de rigidité dynamique de cisaillement de l'ordre 1.4 MPa, alors que la deuxième portion 52 est beaucoup plus rigide avec un mélange doté d'un module de rigidité dynamique de cisaillement de l'ordre 25 MPa. La perte viscoélastique du mélange de la première portion axiale 51, Tgδ est de 0,17. Un exemple de composition pour le mélange élastomérique de la première portion axiale 51 est donné dans le tableau suivant :

**[Tableau 1]**

| Matériau souple de la portion 51 | |
|---|---|
| Composant | Pce |
| SBR (a) | 100 |
| Silice (b) | 70 |
| Agent de couplage (c) | 6 |
| Plastifiant liquide (d) | 30 |
| Plastifiant résine (e) | 0 |
| Noir de carbone | 5 |
| Oxyde de zinc | 3 |
| Acide stéarique | 2 |
| Antioxydant (f) | 2 |
| Accélérateur (g) | 2 |
| DPG | 2 |
| Soufre | 1 |

| | |
|---|---|
| Avec : *(a) SBR avec 27% styrène, butadiène -1,2 :5%, cis-1,4 :15%, trans -1,4: 80% Tg - 48°C* *(b) Silice « Zeosil1165MP » de la société Solvay de surface BET 160m2*/*g* *(c) Silane TESPT « SI69 » de la société Evonik* *(d) Huile TDAE « Flexon 630 » de la société Shell* *(e) Résine « Escorez 2173 » de la société Exxon* *(f) Antioxydant « Santoflex 6PPD » de la société Solutia* *(g) Accélérateur « Santocure CBS » de la société Solutia.* | |

Le matériau de la portion 51 représente l'essentiel du volume de la bande de roulement.

Pour le mélange de la portion 52, une composition comme par exemple, telle que dans le tableau suivant convient :

**[Tableau 2]**

| Matériau rigide de la portion 52 | |
|---|---|
| Composant | Pce |
| NR^{(a)} | 100 |
| Noir de carbone | 70 |
| Résine Form ophénolique | 12 |
| 6-PPD^{(b)} | 2.5 |
| Soufre | 3 |
| ZnO^{(c)} | 3 |
| Acide stéarique | 2 |
| CBS ^{(d)} | 2 |
| HTMT^{(e)} | 4 |
| Soufre | 3 |

| | |
|---|---|
| Avec : *a) NR : Caoutchouc Naturel* *b) 6-PPD : N-1,3-diméthylbutyl-N'-phényl-p-phénylène-diamine (« Santoflex 6-PPD » de la société Flexsys) - antioxydant* *c) ZnO : Oxyde de Zinc, Vulcanisation* *d) CBS : N-cyclohexyl-2-benzothiazyl-sulfénamide (Santocure CBS de la société Flexsys) - accélérateur vulcanisation* *e) HTMT :* | |

Le module de rigidité de cisaillement du mélange élastomérique de la portion 52 est de 25 Mpa, pour une perte viscoélastique mesurée par une valeur de Tgδ de 0,27.

Les blocs situés aux extrémités axiales de la bande de roulement ont chacun une largeur axiale de 55 m. Le bloc au centre de la bande de roulement et les blocs intermédiaires entre les extrémités axiales et le centre de la bande de roulement ont une largeur axiale de 28.7 mm.

Sur la figure 5, le graphique représente l'évolution de la pression de contact évaluée dans le plan méridien au centre de l'aire de contact dans la direction (OZ) en fonction de la position axiale. L'axe des abscisses représente les positions dans la direction axiale (OY), depuis le centre de l'aire de contact jusqu' à son extrémité axiale, et l'axe des ordonnées porte les valeurs de la pression de contact verticale correspondante. La courbe (C0) en continu montre les résultats de pressions de contact verticales pour un pneumatique de l'état de l'art sans gorge 7. La courbe (C1) en traits discontinus montre ces mêmes résultats pour un pneumatique conforme à l'invention. Les résultats montrent l'effet positif de la présence de la gorge 7 par la diminution de la surpression de contact.

Sur la figure 6, on peut voir la sensibilité de la pression de contact en fonction de la largeur de la gorge 7. L'axe des abscisses représente les positions dans la direction axiale (OY), depuis le centre de l'aire de contact jusqu'à son extrémité axiale, et l'axe des ordonnées porte les valeurs de la pression de contact verticale correspondante. La courbe C0 correspond à un pneumatique sans gorge 7 en bordure d'une rainure. Les courbes C1 et C2 correspondent à des largeurs croissantes de la gorge 7. La largeur de la gorge 7 pour la courbe C2 est supérieure à celle de la gorge 7 pour la courbe C1 : l a surpression de contact diminue quand la largeur de la gorge 7 augmente.

## Revendications

1. Pneumatique (1) ayant un axe de rotation et comprenant deux bourrelets (2), deux flancs (3) reliés aux bourrelets, un sommet (4) ayant un premier côté relié à l'extrémité radialement extérieure de l'un des deux flancs (3) et ayant un deuxième côté relié à l'extrémité radialement extérieure de l'autre des deux flancs (3), le sommet (4) comportant une bande de roulement (5), radialement extérieurement à une sous couche (11), comprenant :
∘ Au moins un bloc de sculpture (511) portant une face de contact (9) destinée à venir en contact avec la chaussée pendant le roulage du pneumatique, la face de contact (9) étant délimitée axialement par deux extrémités axiales du bloc de sculpture (511), le bloc de sculpture (511) comprenant : une première portion axiale (51) s'étendant axialement sur une partie de la largeur totale du bloc de sculpture (511), et s'étendant circonférentiellement sur au moins 75% de la circonférence du pneumatique, ladite première portion axiale (51) portant une première portion axiale de la face de contact, ladite première portion axiale (51) comprenant un matériau de base; une seconde portion axiale (52) s'étendant axialement sur une partie de la largeur totale du bloc de sculpture (511), et s'étendant circonférentiellement sur au moins 75% de la circonférence du pneumatique, ladite seconde portion axiale (52) portant une deuxième portion axiale de la face de contact (9), ladite seconde portion axiale comprenant un matériau rigide de renforcement, dont le module de rigidité dynamique de cisaillement est au moins trois fois supérieur à celui du matériau de base ;
∘ au moins une rainure circonférentielle (6) délimitée axialement par deux extrémités axiales (61, 62), une desdites extrémités axiales (61,62) de la rainure circonférentielle (6) étant confondue avec une des extrémités axiales du bloc de sculpture (511) ;
∘ au moins une gorge (7) aménagée dans le bloc de sculpture (511) et portant une face de contact de la gorge (7) destinée à venir en contact avec la chaussée pendant le roulage du pneumatique, la face de contact de la gorge (7) étant délimitée axialement par : l'extrémité axiale de la rainure circonférentielle (6) confondue avec l'extrémité axiale du bloc de sculpture (511), et un épaulement radial entre la première portion axiale (51) et la deuxième portion axiale (52), la gorge (7) étant délimitée radialement par un fond de gorge, la gorge (7) ayant une profondeur P inférieure à 2 mm, mesurée selon une direction radiale entre le fond de gorge (7) et la face de contact la plus radialement extérieure de la première portion axiale (51),
**caractérisé en ce que,** la largeur axiale L7 de la gorge (7) est comprise dans l'intervalle [3 x L52, 1,01xL52], avec L7 étant la largeur axiale de la face de contact de la gorge (7) et L52 étant la largeur axiale de la face de contact de la deuxième portion axiale et **en ce que** le rapport du module de rigidité dynamique de cisaillement du matériau de la deuxième portion (52) du bloc de sculpture (511) divisé par le module de rigidité dynamique de cisaillement du matériau de la première portion axiale (51) du bloc de sculpture (511) est compris dans l'intervalle [5 ;30], les modules de rigidité de cisaillement étant mesurés à 23°C, à 10 Hz, et sous une déformation de cisaillement alterné de 10% du matériau de chaque portion.

2. Pneumatique (1) selon la revendication 1, **dans** lequel les gorges (7) ont des profondeur P différentes d'une portion à l'autre.

3. Pneumatique (1) selon l'une des revendications 1 à 2, **dans lequel** la gorge (7) a un profil incliné par rapport à l'axe de rotation du pneumatique.

4. Pneumatique (1) selon l'une des revendications 1 à 2, **dans lequel** la gorge (7) a un profil courbe.

5. Pneumatique selon l'une des revendications 1 à 2, **dans lequel** la gorge (7) a un profil en escalier.

6. Pneumatique selon l'une des revendications 1 à 5, **dans lequel** la gorge (7) a une profondeur P croissante en allant axialement des premières portions (51) vers les secondes portions (52).

7. Pneumatique selon l'une des revendications 1 à 6, **dans lequel** le matériau de la première portion axiale (51) est un mélange élastomérique ayant un module dynamique de cisaillement G* inférieur ou égal à 5 MPa, mesuré à 60°C et sous une contrainte alternée à 10 Hz.

## Patentansprüche

1. Reifen (1) mit einer Rotationsachse, beinhaltend zwei Wülste (2), zwei Flanken (3), die mit den Wülsten verbunden sind, einen Scheitel (4), der eine erste Seite aufweist, die mit dem radial äußeren Ende einer der zwei Flanken (3) verbunden ist, und eine zweite Seite aufweist, die mit dem radial äußeren Ende der anderen der zwei Flanken (3) verbunden ist, wobei der Scheitel (4) radial außenliegend zu einer Unterschicht (11) eine Lauffläche (5) umfasst, die Folgendes beinhaltet:
o mindestens einen Profilblock (511), der eine Kontaktfläche (9) trägt, die dazu bestimmt ist, während des Rollens des Reifens mit der Fahrbahn in Kontakt zu kommen, wobei die Kontaktfläche (9) axial durch zwei axiale Enden des Profilblocks (511) begrenzt wird, wobei der Profilblock (511) Folgendes beinhaltet: einen ersten axialen Abschnitt (51), der sich axial über einen Teil der Gesamtbreite des Profilblocks (511) erstreckt und sich in Umfangsrichtung über mindestens 75 % des Umfangs des Reifens erstreckt, wobei der erste axiale Abschnitt (51) einen ersten axialen Abschnitt der Kontaktfläche trägt, wobei der erste axiale Abschnitt (51) ein Basismaterial beinhaltet; einen zweiten axialen Abschnitt (52), der sich axial über einen Teil der Gesamtbreite des Profilblocks (511) erstreckt und sich in Umfangsrichtung über mindestens 75 % des Umfangs des Reifens erstreckt, wobei der zweite axiale Abschnitt (52) einen zweiten axialen Abschnitt der Kontaktfläche (9) trägt, wobei der zweite axiale Abschnitt ein steifes Verstärkungsmaterial beinhaltet, dessen dynamisches Scherfestigkeitsmodul mindestens dreimal so groß wie der des Basismaterials ist;
o mindestens eine Umfangsrille (6), die axial durch zwei axiale Enden (61, 62) begrenzt wird, wobei eines der axialen Enden (61, 62) der Umfangsrille (6) mit einem der axialen Enden des Profilblocks (511) zusammenfällt;
o mindestens eine Nut (7), die in dem Profilblock (511) eingerichtet ist und eine Kontaktfläche der Nut (7) trägt, die dazu bestimmt ist, während des Rollens des Reifens mit der Fahrbahn in Kontakt zu kommen, wobei die Kontaktfläche der Nut (7) axial durch Folgendes begrenzt wird: das axiale Ende der Umfangsrille (6), das mit dem axialen Ende des Profilblocks (511) zusammenfällt, und eine radiale Schulter zwischen dem ersten axialen Abschnitt (51) und dem zweiten axialen Abschnitt (52), wobei die Nut (7) radial durch einen Nutboden begrenzt wird, wobei die Nut (7), gemessen entlang einer radialen Richtung zwischen dem Nutboden (7) und der radial äußersten Kontaktfläche des ersten axialen Abschnitts (51), eine Tiefe P kleiner als 2 mm aufweist,
**dadurch gekennzeichnet, dass** die axiale Breite L7 der Nut (7) in dem Intervall [3 x L52, 1,01xL52] enthalten ist, wobei L7 die axiale Breite der Kontaktfläche der Nut (7) ist und L52 die axiale Breite der Kontaktfläche des zweiten axialen Abschnitts ist, **und dass** das Verhältnis des dynamischen Scherfestigkeitsmoduls des Materials des zweiten Abschnitts (52) des Profilblocks (511) zu dem dynamischen Scherfestigkeitsmodul des Materials des ersten axialen Abschnitts (51) des Profilsblocks (511) in dem Intervall [5;30] enthalten ist, wobei die Scherfestigkeitsmodule bei 23 °C, bei 10 Hz und unter einer Scherwechselverformung von 10 % des Materials jedes Abschnitts gemessen werden.

2. Reifen (1) nach Anspruch 1, **wobei** die Nuten (7) von einem Abschnitt zum nächsten unterschiedliche Tiefen P aufweisen.

3. Reifen (1) nach einem der Ansprüche 1 bis 2, **wobei** die Nut (7) ein in Bezug auf die Rotationsachse des Reifens geneigtes Profil aufweist.

4. Reifen (1) nach einem der Ansprüche 1 bis 2, **wobei** die Nut (7) ein gebogenes Profil aufweist.

5. Reifen nach einem der Ansprüche 1 bis 2, **wobei** die Nut (7) ein Stufenprofil aufweist.

6. Reifen nach einem der Ansprüche 1 bis 5, **wobei** die Nut (7) von den ersten Abschnitten (51) axial hin zu den zweiten Abschnitten (52) eine zunehmende Tiefe P aufweist.

7. Reifen nach einem der Ansprüche 1 bis 6, **wobei** das Material des ersten axialen Abschnitts (51) eine Elastomermischung ist, die, gemessen bei 60 °C und unter einer Wechselbeanspruchung bei 10 Hz, ein dynamisches Schermodul G* kleiner als oder gleich 5 MPa aufweist.

## Claims

1. A tire (1) having an axis of rotation and comprising two beads (2), two sidewalls (3) connected to the beads, and a crown (4) having a first side connected to the radially outer end of one of the two sidewalls (3) and a second side connected to the radially outer end of the other one of the two sidewalls (3), the crown (4) having a tread (5), radially on the outside of an underlayer (11), comprising:
∘ at least one tread pattern block (511) bearing a contact face (9) intended to come into contact with the roadway when the tire is running, the contact face (9) being axially delimited by two axial ends of the tread pattern block (511), the tread pattern block (511) comprising: a first axial portion (51) extending axially over part of the total width of the tread pattern block (511) and extending circumferentially over at least 75% of the circumference of the tire, said first axial portion (51) bearing a first axial portion of the contact face, said first axial portion (51) comprising a base material; a second axial portion (52) extending axially over part of the total length of the tread pattern block (511) and extending circumferentially over at least 75% of the circumference of the tire, said second axial portion (52) bearing a second axial portion of the contact face (9), said second axial portion comprising a stiff reinforcing material, the dynamic shear stiffness modulus of which is at least three times greater than that of the base material;
∘ at least one circumferential groove (6) axially delimited by two axial ends (61, 62), one of said axial ends (61,62) of the circumferential groove (6) coinciding with one of the axial ends of the tread pattern block (511);
∘ at least one recess (7), which is made in the tread pattern block (511) and bears a contact face of the recess (7) intended to come into contact with the roadway when the tire is running, the contact face of the recess (7) being axially delimited by: the axial end of the circumferential groove (6) that coincides with the axial end of the tread pattern block (511), and a radial shoulder between the first axial portion (51) and the second axial portion (52), the recess (7) being radially delimited by a recess bottom, the recess (7) having a depth P less than 2 mm, measured along a radial direction between the bottom of the recess (7) and the radially outermost contact face of the first axial portion (51),
**characterized in that** the axial width L7 of the recess (7) is within the range [3 x L52, 1.01 × L52], with L7 being the axial width of the contact face of the recess (7) and L52 being the axial width of the contact face of the second axial portion, **and in that** the ratio of the dynamic shear stiffness modulus of the material of the second portion (52) of the tread pattern block (511) divided by the dynamic shear stiffness modulus of the material of the first axial portion (51) of the tread pattern block (511) is within the range [5;30], the shear stiffness moduli being measured at 23°C, at 10 Hz, and under an alternating shear stress of 10% of the material of each portion.

2. The tire (1) as claimed in claim 1, **wherein** the recesses (7) have depths P which differ from one portion to another.

3. The tire (1) as claimed in either of claims 1 and 2, **wherein** the recess (7) has an inclined profile in relation to the axis of rotation of the tire.

4. The tire (1) as claimed in either of claims 1 and 2, **wherein** the recess (7) has a curved profile.

5. The tire as claimed in either of claims 1 and 2, **wherein** the recess (7) has a stepped profile.

6. The tire as claimed in any one of claims 1 to 5, **wherein** the recess (7) has a depth P which increases axially from the first portions (51) to the second portions (52).

7. The tire as claimed in one of claims 1 to 6, **wherein** the material of the first axial portion (51) is an elastomeric compound having a dynamic shear modulus G* less than or equal to 5 MPa, measured at 60°C and under an alternating stress at 10 Hz.
